Europäisches Patentamt

European Patent Office

Office européen des brevets

(19)

(11) Numéro de publication: **0 184 495 B1**

## (12) FASCICULE DE BREVET EUROPEEN

(45) Date de publication du fascicule du brevet:
22.03.89

(51) Int. Cl.⁴: **G 01 V 1/22**, G 01 V 1/24

(21) Numéro de dépôt: **85402273.8**

(22) Date de dépôt: **22.11.85**

(54) **Procédé pour contrôler la mémorisation de données reçues par un système d'enregistrement sismique et dispositif pour sa mise en oeuvre.**

(30) Priorité: **30.11.84 FR 8418424**

(43) Date de publication de la demande:
**11.06.86 Bulletin 86/24**

(45) Mention de la délivrance du brevet:
**22.03.89 Bulletin 89/12**

(84) Etats contractants désignés:
**DE GB IT NL**

(56) Documents cités:
**FR-A- 2 289 088**
**US-A- 2 739 301**
**US-A- 3 990 036**
**US-A- 4 112 412**
**US-A- 4 320 472**

**L'ONDE ELECTRIQUE, vol. 62, no. 10, octobre 1982, pages 15-16, Paris, FR; "Acquisition de données sur 1000 points par bus ouvert"**

(73) Titulaire: **INSTITUT FRANCAIS DU PETROLE, 4, Avenue de Bois-Préau, F-92502 Ruell-Malmaison (FR)**

(72) Inventeur: **Rialan, Joseph, 15, rue de Bigots, F-92190 Meudon (FR)**
Inventeur: **Bary, Renate, 5, rue Edouard Manet, F-92500 Rueil-Malmaison (FR)**

(74) Mandataire: **Kermarrec, Michelle et al, Institut Français du Pétrole 4, avenue de Bois-Préau, F-92502 Rueil Malmaison (FR)**

## Description

L'invention a pour objet un procédé pour contrôler la mémorisation de données reçues par un système d'enregistrement sismique et un dispositif pour sa mise en œuvre.

Plus particulièrement, le procédé selon l'invention s'applique à l'enregistrement de signaux sismiques transmis depuis une pluralité d'ensembles de réception répartis le long d'un profil sismique, sous la forme de séries d'échantillons numérisés et centralisés dans un laboratoire d'enregistrement et de traitement.

Ces ensembles de réception sont constitués généralement de dispositifs d'acquisition adaptés à échantillonner les signaux captés par un ou plusieurs capteurs sismiques, en réponse aux échos sur des couches souterraines d'ondes sismiques émises dans le sol, à numériser ces signaux et à les mémoriser. Lorsque l'acquisition des signaux sismiques est terminée, l'ensemble des échantillons numériques mémorisés par chacun des dispositifs d'acquisition est transmis au laboratoire central. La transmission peut s'effectuer, soit par ondes hertziennes, soit par un câble commun connectant les dispositifs d'acquisition en parallèle. A la réception de signaux de commande spécifiques envoyés depuis le laboratoire, chaque dispositif procède à la transmission des données qu'il a acquises par voie hertzienne ou bien encore en se connectant sur le câble commun. Un tel ensemble est décrit par exemple dans le brevet français N° 2 511 772 ou le brevet français N° 2 538 561.

Chaque dispositif d'acquisition fait précéder la transmission des données qu'il a mémorisées, de signaux d'identification. La transmission des données peut être complète ou fractionnée. Dans le premier cas, tous les mots numériques de la série sont transmis en chaîne. Dans le second cas, l'ensemble des échantillons est divisé en groupes d'échantillons transmis en chaîne, et des mots de synchronisation sont transmis entre deux groupes successifs quelconques. Quand la qualité de la liaison n'est pas parfaite, il se produit des erreurs de transmission. Certains mots numériques ou groupes de mots numériques ne sont pas transmis ou bien encore sont tronqués ou rendus indétectables du fait que des parasites viennent se superposer à ces mots sur la ligne ou la voie hertzienne. Lorsque la transmission de la série est terminée, on peut toujours vérifier si le nombre d'échantillons centralisés en mémoire au laboratoire central correspond au nombre d'échantillons qui a été transmis mais, au cas où une certaine partie manque par suite de défauts de transmission, il est impossible de savoir avec précision à quel moment les erreurs se sont produites. Les échantillons étant rangés dans la mémoire suivant leur ordre d'arrivée, certains d'entre eux qui ne se suivaient pas dans la série transmise se retrouvent juxtaposés dans la mémoire du fait que certaines données manquent et les instants de la séquence où ces «tassements» se sont produits ne peuvent être déterminés.

Le procédé selon l'invention permet d'éviter les inconvénients ci-dessus mentionnés. Il comporte la subdivision de chaque série d'échantillons transmis en une pluralité de blocs contenant chacun le même nombre d'échantillons, chacun de ces blocs étant séparé des autres par des signaux de synchronisation et pourvu de signaux d'identification définissant son numéro d'ordre dans chaque série, les contrôles successifs des signaux de synchronisation et des signaux d'identification associés à chaque bloc et le transfert de chacun des blocs reconnus conformes par le contrôle, à des emplacements d'un support d'enregistrement affectés préalablement à se bloc.

Le contrôle peut comporter également un comptage du nombre d'échantillons de chaque groupe reçu et la validation des blocs d'échantillons reçus dont le nombre est au moins égal à une valeur-seuil déterminée.

Les opérations de reconnaissance effectuées sur les signaux de synchronisation et d'identification en tête de chaque bloc et la vérification éventuelle du nombre d'échantillons de chaque bloc reçu, permettent un rangement en bon ordre des données mémorisées. Les emplacements de mémoire qui étaient affectés par avance à certaines données, sont laissés libres si ces données ne parviennent pas au système d'enregistrement, par suite d'erreurs de transmission. La chronologie précise des étapes de réception étant respectée, les données sismiques peuvent être reconstituées avec exactitude à partir des échantillons mémorisés, ce qui améliore la lisibilité des coupes sismiques obtenues.

D'autres caractéristiques et avantages du procédé selon l'invention apparaîtront à la lecture de la description d'un mode particulier de réalisation d'un dispositif pour sa mise en œuvre, donné à titre d'exemple non limitatif et en se référant aux dessins annexés où:

- la figure 1 montre schématiquement un système de prospection sismique disposé le long d'un profil sismique à explorer,

- la figure 2 montre schématiquement la structure d'un bloc d'échantillons de signaux numériques transmis,

- la figure 3 représente schématiquement un premier mode de réalisation du dispositif de mise en œuvre, permettant de contrôler les blocs d'échantillons reçus, avant leur enregistrement,

- la figure 4 représente les chronogrammes d'impulsions engendrées par un élément de synchronisation du dispositif,

- la figure 5 représente schématiquement un second mode de réalisation du dispositif de mise en œuvre utilisant un calculateur, et

- la figure 6 représente une mémoire où les échantillons reçus sont successivement rangés.

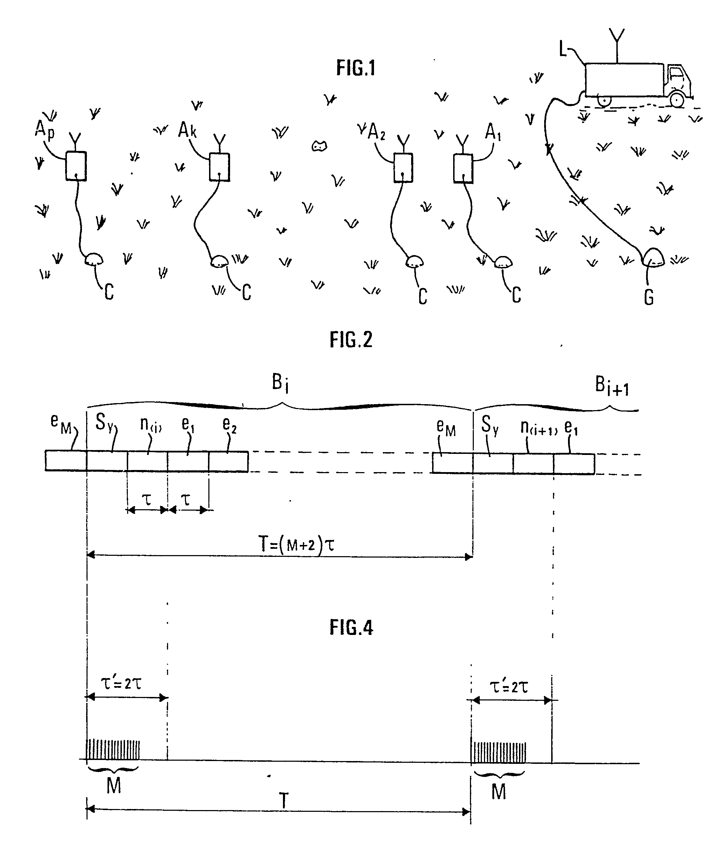

Un système de prospection sismique comporte (Fig. 1) une pluralité de capteurs sismiques C répartis le long d'un profil à explorer, un ensemble de dispositifs ou boitiers $A_1$, $A_2$... $A_k$... $A_p$ pour l'acquisition des signaux reçus par les capteurs sismiques, en réponse aux échos sur des couches souterraines d'ondes acoustiques émises dans le sol par une source sismique G et un laboratoire central L comportant un système d'enregistrement et un ensemble assurant la conduite des opérations de prospection. Ce système est adapté à déclencher la source sismique G, à commander l'acquisition par les différents dispositifs $A_1$, $A_2$. . . $A_k$. . . $A_p$, des signaux reçus par les capteurs C et, à l'issue de l'étape de réception, à coordonner le transfert séquentiel des données depuis les différents dispositifs d'acquisition jusqu'au système d'enregistrement. Le transfert est effectué par voie hetzienne par exemple.

Les données sismiques transmises depuis chacun des dispositifs d'acquisition se présentent sous la forme de séries de «mots» numériques correspondant à des échantillons prélevés successivement sur les signaux reçus par les capteurs C et numérisés.

En application du procédé selon l'invention, les différents dispositifs d'acquisition $A_1$, $A_2$ . . . $A_k$ . . . $A_p$ sont adaptés à subdiviser chaque série de mots numériques en une pluralité de blocs $B_i$, $B_{i+1}$ etc. (Fig. 2) contenant chacun un même nombre M de mots numériques $e_1$, $e_2$. . . $e_M$ de format identique et à associer à chacun de ces blocs un mot $S_y$ de synchronisation et un mot $n(i)$, $n(i+1)$ etc., définissant son numéro d'ordre à l'intérieur de la série. Le durée de transmission d'un bloc comportant M échantillons et les deux mots $S_y$ et $n$ est donnée par la relation:

$$T=(M+2)\tau,$$

où $\tau$ désigne la durée de transmission d'un échantillon.

Un dispositif d'acquisition quelconque $A_1$ à $A_p$ ayant reçu l'ordre de transmission qui le concerne, se connecte sur la voie de transmission utilisée pour transmettre la série ou les séries de mots numérisés qu'il a mémorisés, sous la forme définie ci-dessus.

Le mot de synchronisation $S_y$ permet de repérer la séparation entre deux blocs consécutivement reçus et de déterminer l'instant d'arrivée de chacun d'eux. Le numéro de bloc contenu dans le mot numérique $n(i)$, $n(i+1)$ qui suit immédiatement le mot de synchronisation, est utilisé pour commander le rangement des échantillons aux emplacements prévus du support d'enregistrement.

Le dispositif de mise en œuvre décrit ci-après a pour fonction de valider les blocs d'échantillons reçus et après validation, de conduire les opérations de mémorisation.

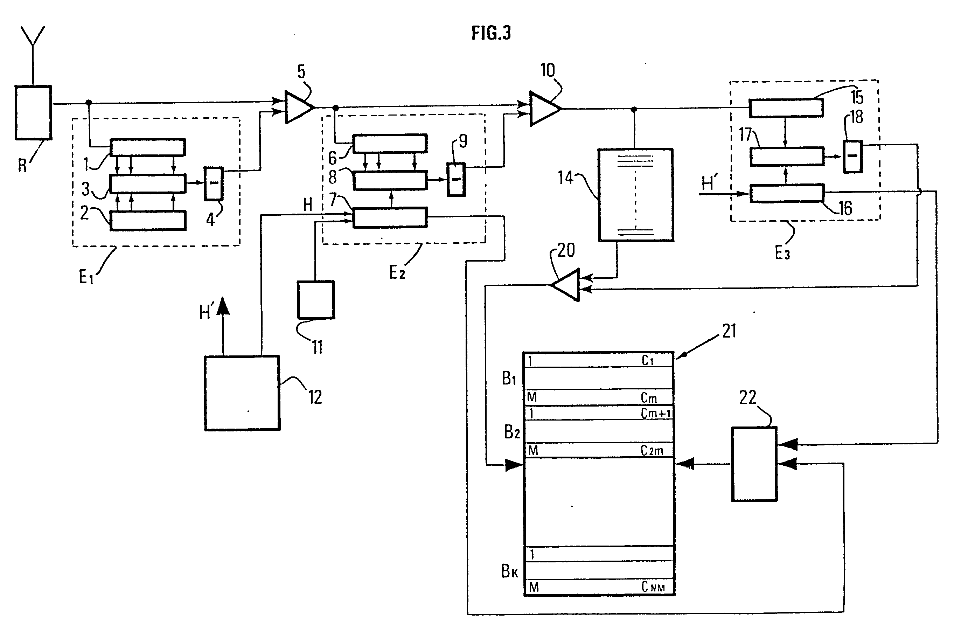

Il comporte (Fig. 3) une première unité de contrôle $E_1$ comportant un premier registre 1, un second registre 2 et un comparateur 3 adaptés à contenir les mots numériques reçus et un basculeur bistable 4. Un ensemble de réception R des séries de mots numériques à enregistrer, est connecté à l'entrée du registre 1 et à l'entrée d'une première porte de contrôle 5. L'entrée de commande de celle-ci est connectée à une sortie du basculeur 4. Le registre 2 contient un mot numérique identique aux mots de synchronisation $S_y$ à reconnaître. Le comparateur 3 est connecté aux sorties en parallèle des registres 1 et 2 et, lorsqu'il détecte une identité entre les contenus des deux registres, il actionne le basculeur 4 qui ouvre la première porte de contrôle 5.

Le dispositif comporte également une seconde unité de contrôle $E_2$ comportant un registre 6, un compteur 7, un comparateur 8 et un basculeur bistable 9 commandé par le comparateur 8. La sortie de la porte de commande 5 est connectée à l'entrée du registre 6 et à une entrée d'une seconde porte de contrôle 10. L'entrée de comptage du compteur 7 reçoit un signal d'horloge H délivré par un élément de synchronisation 11. Un élément 12, connecté à des entrées de commande du compteur 7, permet de sélectionner sa capacité maximale et de la rendre égale au nombre M de blocs d'échantillons de la série à enregistrer. La période du signal H est adaptée à la période de réception des blocs d'échantillons successifs, de manière que le compteur 7 soit incrémenté d'une unité au début de toute nouvelle période T (Fig. 2). Lorsque le comparateur détecte une identité entre un mot introduit dans le registre 6 et le nombre inscrit au compteur 7, il actionne le basculeur bistable 9. La sortie de celui-ci est connectée à l'entrée de commande de la porte 10.

La sortie de la porte 10 est connectée d'une part à une mémoire-tampon 14 adaptée à contenir au moins les mots numériques d'un même bloc et, d'autre part, à l'entrée d'une troisième unité de contrôle $E_3$.

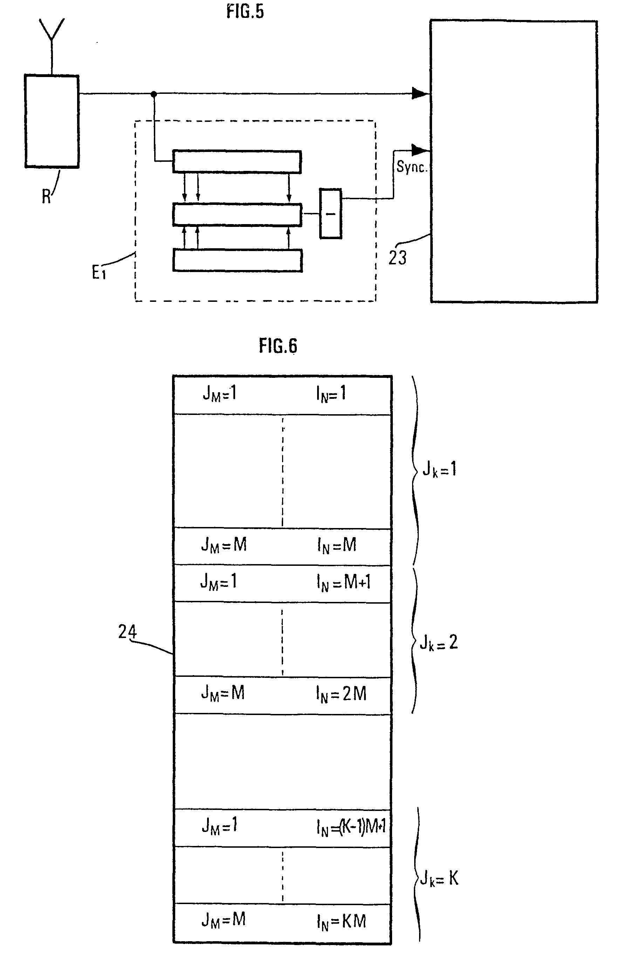

Celle-ci comporte un premier et un second compteurs 15, 16, un comparateur 17 connecté aux deux compteurs 15, 16 et un basculeur bistable 18 actionné par le comparateur 17. L'entrée du compteur 16 reçoit de l'élément de synchronisation 11 un signal d'horloge H' constitué de M impulsions (M étant le nombre de mots de chaque bloc) engendrées au début de chaque période T, avant la réception des échantillons successifs $e_1$ à $e_M$ (Fig. 4).

Une sortie du basculeur 18 est connectée à une entrée d'une porte ET 20, une seconde entrée de celle-ci étant connectée à la sortie de la mémoire-tampon 14. La sortie de la porte ET 20 est connectée à l'entrée des données d'un ensemble de mémorisation 21. Une reigstre d'adresse 22 est associé à l'ensemble 21 pour contrôler l'accès des données aux emplacements de celui-ci. Les entrées de commande du registre 22 sont connectées respectivement aux sorties «retenue» des compteurs 7 et 16.

La première unité de contrôle $E_1$ est adaptée à détecter les mots de synchronisation $S_y$ successifs transmis en tête des blocs d'échantillons par comparaison des mots successifs défilant dans le registre 1 avec un mot identique aux mots $S_y$, introduit dans le registre 2. La seconde unité de contrôle $E_2$ est adaptée à détecter le numéro d'ordre de chaque bloc d'échantillons reçus et à vérifier que les blocs d'une même série sont bien reçus dans l'ordre. La troisième unité de contrôle est adaptée à vérifier que chaque bloc reçu comporte bien le nombre attendu d'échantillons et à valider leur mémorisation.

Le dispositif fonctionne de la manière suivante:

La transmission d'une série ayant été déclenchée, les mots successifs de cette série défilent dans le registre 1 de la première unité de contrôle $E_1$. Lorsque le comparateur 3 détecte au passage un mot de synchronisation $S_y$ par comparaison avec le mot contenu dans le registre 2, il commande l'activation du basculeur 4, lequel commande l'ouverture de la porte de contrôle 5. Les mots suivant le mot de synchronisation $S_y$ reconnu, ont alors accès à la seconde unité de contrôle $E_2$.

De la même manière, celle-ci compare les mots numériques défilant dans le registre 6 et le mot numérique représentant le numéro du bloc d'échantillon attendu. Un nombre i de blocs ayant déjà été reçus et le compteur de référence 7 ayant été incrémenté d'une unité par l'élément de synchronisation 11, au début de la période T de réception du bloc $B_{i+1}$, la détection par le comparateur 8 du numéro d'identification de ce bloc, provoque l'activation du basculeur 9 et, par conséquent, l'ouverture de la porte ET 10.

L'ouverture de la porte ET 10 permet l'accès des échantillons $E_1$, $E_2$...$E_M$ successifs au compteur 15 de la troisième unité de contrôle et à la mémoire-tampon 14 où ils sont enregistrés. Le compteur 16 ayant été incrémenté au début de la période T (Fig. 5) par le signal H' issu de l'élément de synchronisation 11, à une valeur M, le comparateur 17 vérifie que le nombre d'échantillons comptés correspond bien à cette valeur et dans ce cas déclenche le basculeur 18. L'ouverture de la porte 20 permet le transfert des échantillons du bloc reçu de la mémoire-tampon 14 aux emplacements de l'ensemble de mémorisation 21 désignés successivement par l'élément 22.

L'incrémentation de l'élément d'adressage 22 est assuré, d'une part, par les impulsions issues du compteur 16 lorsque celui-ci, au début de la période de réception suivante T reçoit le signal H' (Fig. 4) et, d'autre part, par les impulsions de période T produites par le compteur 7 à chaque fois qu'il est encrémenté. Les dites impulsions de période commandent l'enregistrement de tout nouveau bloc dans une section différente de l'élément de mémorisation 21. Les impulsions issues du compteur 16 commandent le rangement des échantillons d'un même bloc aux emplacements différents d'une même section de l'élément 21. Les opérations de reconnaissance effectuées sur les mots $S_y$ et n(i) en tête de chaque bloc et la vérification du nombre d'échantillons de chaque bloc reçu, permettent un rangement en bon ordre des données mémorisées.

Le mode de réalisation de la figure 3 est particulièrement adapté àun système de transmission à très grand débit.

Suivant le mode de réalisation de la figure 5, l'ensemble de réception R transmet les mots numériques successivement reçus à un calculateur programmable 23 et à une unité $E_1$ analogue à l'unité $E_1$ du dispositif de la figure 4 qui reconnaît, parmi les mots de chaque série, les mots de synchronisation précédant chacun des blocs successifs d'échantillons et, à chaque détection, transmet un signal de détection SYNC au calculateur 23.

Le calculateur 23 est adapté à effectuer un ensemble de tests de validation sur les mots successifs reçus et le signal de détection engendré par l'unité $E_1$ pour vérifier que les blocs sont conformes, avant de commander leur rangement à leurs places respectives dans une mémoire interne 24 représentée à la figure 6 sous la forme d'un tableau.

Le calculateur 23 effectue ses tests suivant l'organigramme ci-après qui traduit en instructions les étapes du procédé selon l'invention. Les différents symboles et indices dans cet organigramme sont les suivants:

SYNC:     signaux de reconnaissance engendrés par l'ensemble $E_1$,

SYNCHRO: mots de synchronisation reçus, N:           nombre de mots de la série d'échantillons à recevoir,

$I_N$:         index désignant les emplacements successifs de la mémoire,

M:          nombre d'échantillons dans chaque bloc,

$J_M$:        index désignant successivement les échantillons de chaque bloc,

K:          nombre de blocs de M échantillons à recevoir,

$J_K$:        index désignant les blocs successifs, et

$I_K$:         numéro du bloc reçu.

## Revendications

1. Procédé pour contrôler la mémorisation par un système d'enregistrement, de données sismiques consistant en séries d'échantillons de signaux numérisés associés à des signaux de contrôle qui permettent de détecter d'éventuelles erreurs de transmission, ces données étant transmises depuis des dispositifs d'acquisition de données sismiques, caractérisé en ce qu'il comporte:

— la subdivision de chaque série d'échantillons transmis en une pluralité de blocs (Bi) contenant chacun le même nombre (M) d'échantillons, chacun de ces blocs étant séparé des autres par des signaux de synchronisation ($S_y$) et pourvu de signaux d'identification (n(i)) définissant son numéro d'ordre dans chaque série,

— les contrôles successifs des signaux de synchronisation et des signaux d'identification associés à chaque bloc,

— le transfert de chacun des blocs reconnus conformes par ledit contrôle, à des emplacements d'un support d'enregistrement affectés préalablement audit bloc.

2. Procédé selon la revendication 1, caractérisé en ce que ledit contrôle comporte un comptage du nombre d'échantillons de chaque bloc reçu et la validation des blocs d'échantillons dont le nombre est supérieur à une valeur déterminée.

3. Dispositif pour la mise en œuvre du procédé selon la revendication 1, caractérisé en ce qu'il comporte une première unité ($E_1$) de reconnaissance des signaux de synchronisation permettant de contrôler l'accès des données reçues à un ensemble pour détecter les signaux d'identification de numéro d'ordre et commander le rangement des échantillons à des emplacements prédéterminés d'organe d'enregistrement (21).

4. Dispositif selon la revendication 3, caractérisé en ce que l'ensemble de détection et de commande comporte une mémoire-tampon (14), une seconde unité ($E_2$) de reconnaissance du numéro d'ordre de chaque bloc d'échantillons, contrôlant l'accès des échantillons dudit bloc à la mémoire-tampon (14) et une unité de comptage ($E_3$) du nombre d'échantillons de chaque bloc transféré dans la mémoire-tampon, adapté à commander le transfert des échantillons de la mémoire-tampon à l'ensemble d'enregistrement (21) quand le bloc d'échantillons reçu est complet.

5. Dispositif selon la revendication 3, caractérisé en ce que l'ensemble de détection et de contrôle comporte un calculateur (23).

6. Dispositif selon la revendication 4, caractérisé en ce que la première et la seconde unités ($E_1$, $E_2$) de reconnaissance comportent chacune un registre (1, 6) pour contenir les mots successifs de chaque série, un moyen de mémorisation (2, 7) d'une valeur de référence, un moyen de comparaison (3, 8) des mots contenus dans le registre avec la valeur contenue dans le moyen de mémorisation et un basculeur bistable (4, 9) commandé par le moyen de comparaison pour engendrer un signal de validation.

7. Dispositif selon la revendication 4, caractérisé en ce que le moyen de mémorisation de la première unité de renconnaissance est un registre (2) contenant un mot numérique identique aux mots de synchronisation.

8. Dispositif selon la revendication 4, caractérisé en ce que le moyen de mémorisation de la seconde unité de reconnaissance ($E_2$) comporte un compteur (7) connecté à un élément-horloge (11) adapté à fournir des signaux d'incrémentation (H) dont la période est égale à l'intervalle de temps de réception d'un bloc d'échantillons.

9. Dispositif selon la revendication 4, caractérisé en ce que l'unité de comptage ($E_3$) comporte un premier compteur (15) incrémenté par les échantillons successifs de chaque bloc reçu, un second compteur (16) connecté à un élément-horloge (11) adapté à fournir des signaux d'incrémentation (H') en nombre égal aux échantillons de chaque bloc, au début de la réception de chacun de ceux-ci, et un comparateur (17) associé à un basculeur bistable (18) pour commander le transfert dans le système d'enregistrement (21) des échantillons contenus dans la mémoire-tampon (14).

## Patentansprüche

1. Verfahren zur Kontrolle der Speicherung von seismischen Daten, die von einer Registrierungsanordnung empfangen werden, und die aus Probenreihen von digitalen Signalen bestehen, die mit Kontrollsignalen verbunden sind, die ermöglichen, eventuelle Übertragungsfehler zu ermitteln, wobei die Daten von Einrichtungen zur Erfassung der seismischen Daten übertragen werden, dadurch gekennzeichnet, dass es umfasst:

— die Aufgliederung jeder übertragenen Probenreihe in eine Vielzahl von Blöcken (Bi), von denen jeder die gleiche Anzahl (M) von Proben enthält, wobei jeder der Blöcke von den anderen durch Synchronisationssignale ($S_y$) getrennt und mit Identifizierungssignalen (n(i)) versehen ist, die seine Ordnungsnummer in jeder Reihe bestimmen,

— die aufeinanderfolgenden Kontrollen der Synchronisationssignale und der Identifizierungssignale, die jedem Block zugehörig sind,

— die Übertragung jedes der Blöcke, der durch die Kontrolle als konform erkannt wird, an Stellen eines Speichermediums, die dem Block vorhergehend zugewiesen worden sind.

2. Verfahren nach Anspruch 1, dadurch gekennzeichnet, dass die Kontrolle ein Zählen der Probenzahl jedes empfangenen Blockes und die Bestätigung der Gültigkeit der Probenblöcke umfasst, deren Anzahl grösser ist als ein bestimmter Wert.

3. Vorrichtung zur Durchführung des Verfahrens nach Anspruch 1, dadurch gekennzeichnet, dass sie eine erste Einheit ($E_1$) zum Erkennen der Synchronisationssignale aufweist, die die Kontrolle des Zutritts der in einer Anordnung empfangenen Daten ermöglicht, um die Signale zur Identifizierung der Ordnungsnummer zu ermitteln und das Speichern der Proben an den vorbestimmten Stellen des Speicherorgans (21) zu steuern.

4. Vorrichtung nach Anspruch 3, dadurch gekennzeichnet, dass die Anordnung zum Ermitteln und zum Steuern einen Pufferspeicher (14), eine zweite Einheit ($E_2$) zum Erkennen der Ordnungsnummer jedes Probenblockes, die den Zutritt der Proben des Blockes in den Pufferspeicher (14) kontrolliert, und eine Einheit ($E_3$) zum Zählen der Anzahl der Proben jedes Blockes, umfasst, die in den Pufferspeicher übertragen werden zum Steuern der Übertragung der Proben aus dem Pufferspeicher in die Registrierungsanordnung (21), wenn der empfangene Probenblock vollständig ist.

5. Vorrichtung nach Anspruch 3, dadurch gekennzeichnet, dass die Anordnung zum Erfassen und zum Kontrollieren einen Rechner (23) aufweist.

6. Vorrichtung nach Anspruch 4, dadurch gekennzeichnet, dass jede erste und zweite Einheit ($E_1$, $E_2$) zum Erkennen ein Register (1, 6) zum Aufnehmen der aufeinanderfolgenden Worte jeder Reihe, eine Einrichtung (2, 7) zum Speichern eines Bezugswertes, eine Einrichtung (3, 8) zum Vergleichen der in dem Register aufgenommenen Wörter mit dem Wert, der in der Speichereinrichtung enthalten ist, und ein bistabiles Kippglied (4, 9) umfasst, das von der Vergleichseinrichtung gesteuert wird, zum Erzeugen eines Signals zur Bestätigung der Gültigkeit.

7. Vorrichtung nach Anspruch 4, dadurch gekennzeichnet, dass die Speichereinrichtung der ersten Erkennungseinheit ein Register (2) ist, das ein numerisches Wort enthält, das identisch ist zu den Synchronisationswörtern.

8. Vorrichtung nach Anspruch 4, dadurch gekennzeichnet, dass die Speichereinrichtung der zweiten Erkennungseinheit ($E_2$) ein Zählwerk (7) aufweist, das mit einem Taktgeber (11) zum Liefern von Schrittsignalen (H) verbunden ist, deren Periode gleich ist einem Zeitintervall zum Empfangen eines Probenblockes.

9. Vorrichtung nach Anspruch 4, dadurch gekennzeichnet, dass die Zähleinheit ($E_3$) ein erstes Zählwerk (15), das von aufeinanderfolgenden Proben jedes empfangenen Blockes schrittweise erhöht wird, ein zweites Zählwerk (16), das mit einem Taktgeber (11) zum Liefern von Schritterhöhungssignalen (H') in einer Anzahl, die gleich ist der der Proben jedes Blockes, zu Beginn des Empfangs jeder von diesen verbunden ist, und einen Komparator (17) aufweist, der mit einem bistabilen Kippglied (18) verbunden ist zum Steuern der Übertragung der Proben, die in dem Pufferspeicher (14) enthalten sind, in die Registrierungsanordnung (21).

**Claims**

1. A method for checking the storage by a recording system of seismic data consisting of series of samples of digitised signals associated with checkingsignals which make it possible to detect any transmission errors, this data being transmitted from devices for acquisition of seismic data, characterised in that it comprises:
   - subdividing each series of samples transmitted into a plurality of blocks ($B_i$) each containing the same number (M) of samples, each of these blocksbeing separated from the others by synchronisation signals ($S_y$) and provided with identification signals ($n_{(i)}$) defining its order number in each series,
   - successively checking the synchronisation signals and the identification signals associated with each block,
   - transferring each of the blocks found to be correct by said check to locations previsously allocated to said block in a recording medium.

2. A method as in claim 1, characterised in that said check comprises counting the number of samples in each block received and validating the blocks of samples with a number greater than a given value.

3. A device for implementing the method as in claim 1, characterised in that it comprises a first unit ($E_1$) for recognising the synchronisation signals making it possible to check the access of the data received to an assembly for detecting the signals identifying the order number and controlling the storage of the samples in predetermined locations in the recording medium (21).

4. A device as in claim 3, characterised in that the assembly for detecting and controlling comprises a buffer memory (14), a second unit ($E_2$) for recognising the order number of each block of samples, checking the access of the samples of said block to the buffer memory (14) and a unit ($E_3$) for counting the number of samples of each block transferred to the buffer memory, adapted to control the transfer of the samples from the buffer memory to the recording assembly (21) when the block of samples received is complete.

5. A device as in claim 3, characterised in that the assembly for detecting and controlling comprises a computer (23).

6. A device as in claim 4, characterised in that the first and the second units ($E_1$, $E_2$) for recognition each comprise a register (1, 6) to contain the successive words of each series, a means (2, 7) for storing a reference value, a means (3, 8) for comparing the words contained in the register with the value contained in the storage means, and a bistable flip-flop (4, 9) controlled by the comparison means to generate a validation signal.

7. A device as in claim 4, characterised in that the storage means of the first recognition unit is a register (2) containing a digital word identical to the synchronization words.

8. A device as in claim 4, characterised in that the storage means of the second recognition unit ($E_2$) comprises a counter (7) connected to a clock element (11) adapted to supply incrementation signals (H) the period of which is equal to the time interval for reception of a block of samples.

9. A device as in claim 4 characterised in that the counting unit ($E_3$) comprises a first counter (15) incremented by the successive samples of each block received, a second counter (16) connected to a clock element (11) adapted to supply incrementation signals (H') in a number equal to the samples of each block, at the start of reception of each of the latter, and a comparator (17) associated with a bistable flip-flop (18) to control the transfer of the samples contained in the buffer memory (14) to the recording system (21).

1/3

**FIG.1**

**FIG.2**

**FIG.4**

FIG.3

FIG.5

FIG.6

| | |
|---|---|
| $J_M=1$ | $I_N=1$ |
| | |
| $J_M=M$ | $I_N=M$ |
| $J_M=1$ | $I_N=M+1$ |
| | |
| $J_M=M$ | $I_N=2M$ |
| | |
| | |
| $J_M=1$ | $I_N=(K-1)M+1$ |
| | |
| $J_M=M$ | $I_N=KM$ |

$J_k=1$

$J_k=2$

$J_k=K$

24